# EUROPÄISCHE PATENTANMELDUNG

(11) **EP 3 130 383 A1**
(43) Veröffentlichungstag der Anmeldung: **15.02.2017**
(21) Anmeldenummer: 15181130.4
(22) Anmeldetag: 14.08.2015
(51) Int. Cl.: B01D 1/00, C02F 1/16, F01K 17/04, C02F 103/08, F01K 23/10, B01D 3/00

(54) **KRAFTWERKSANLAGE MIT THERMISCHER MEERWASSERENTSALZUNGSEINRICHTUNG**

(71) Anmelder: Siemens Aktiengesellschaft, 80333 München (DE)
(72) Erfinder: Voit, Kai, 64750 Lützelbach (DE)

(57) **Zusammenfassung**

Die Erfindung betrifft eine Kraftwerksanlage (1) umfassend einen Dampfteil (2), welcher neben einem Kondensator (10) und einem Abhitzdampferzeuger (11) auch eine mit beiden fluidtechnisch verschaltete Dampfturbine (12) aufweist, sowie weiterhin umfassend eine thermische Meerwasserentsalzungseinrichtung (20), die ebenfalls fluidtechnisch mit dem Abhitzdampferzeuger (11) zur Versorgung mit Wasserdampf verschaltet ist, wobei weiterhin eine Zuleitung (21) umfasst ist, über welche die thermische Meerwasserentsalzungseinrichtung (20) mit Meerwasser versorgt wird, und welche stromauf der Meerwasserentsalzungseinrichtung (20) mit dem Kondensator (11) des Dampfteils (2) wärmetechnisch verschaltet ist.

## Beschreibung

Die vorliegende Erfindung betrifft eine Kraftwerksanlage umfassend einen Dampfteil, welcher neben einem Kondensator in einem Abhitzedampferzeuger auch eine mit beiden fluidtechnisch verschaltete Dampfturbine aufweist, sowie weiterhin eine thermische Meerwasserentsalzungseinrichtung, die ebenfalls fluidtechnisch mit dem Abhitzedampferzeuger zur Versorgung mit Wasserdampf verschaltet ist.

Meerwasserentsalzungseinrichtungen werden vor allem in Regionen der Erde genutzt, in welchen nicht ausreichend Trink- bzw. Brauchwasser zur Verfügung steht. Die Entsalzung wird in derartigen Meerwasserentsalzungseinrichtungen nach unterschiedlichen bekannten Verfahren durchgeführt, mittels welcher die Salze und Mineralien aus dem Meerwasser entfernt werden. Typische nicht-thermische Verfahren basieren hierbei etwa auf dem Prozess einer Umkehrosmose bzw. einer Membrandestillation. Thermische Meerwasserentsalzungseinrichtungen hingegen machen sich zu nutzen, dass bei Verdampfung von salzhaltigem Wasser das Destillat praktisch keine bzw. nur eine sehr stark verminderte Menge an Salzen und Mineralien aufweist.

Die heutzutage am weitesten verbreiteten Verfahren zur thermischen Meerwasserentsalzung basieren auf dem Multi-Effect-Destillation-Prozess (MED) bzw. der technischen Weiterführung dieser Technologie, dem Multi-Stage-Flash-Evaporation-Prozess (MSF). Bei dem MSF-Verfahren wird mittels thermischer Energie eines Kraftwerkes das vorab gereinigte Meerwasser auf eine Temperatur oberhalb des Siedepunktes erwärmt. Typischerweise erfolgt eine Erwärmung auf etwa 115 °C. Die wasserförmigen Bestandteile des Meerwassers verdampfen und werden in sequentiell verschalteten Entspannungsstufen bei verringertem Luftdruck sukzessive verdampft. Dieser Dampf schlägt sich als Kondensat innerhalb der einzelnen Verdampfungsstufen ab und kann als weitgehend salzfreies Wasser abgeleitet werden. Dieses Wasser steht nun als Trinkwasser bzw. Brauchwasser zur Verfügung.

Die bisherigen technischen Verschaltungen von thermischen Meerwasserentsalzungseinrichtungen in einer Kraftwerksanlage basieren darauf, dass in dem Dampfteil des Kraftwerks thermisch aufbereiteter Wasserdampf der thermischen Meerwasserentsalzungseinrichtung zugeführt wird, um diese mit ausreichender thermischer Energie für die Verdampfung des Meerwassers zu versorgen. Hierbei wird typischerweise aus dem Dampfteil eine Dampfleitung abgeführt, die mit der thermischen Meerwasserentsalzungseinrichtung fluidtechnisch verschaltet ist. Die Meerwasserentsalzungseinrichtung weist zudem eine geeignete Zuleitung auf, über welche der Meerwasserentsalzungseinrichtung Meerwasser zugeführt werden kann, sowie eine entsprechende Ableitung, über welche das mit Salzen und Mineralien angereicherte Meerwasser, welches nicht verdampft wurde, wieder abgeführt und typischerweise in das Meer zurückgeführt wird. Gleichzeitig zum Betrieb der Meerwasserentsalzungseinrichtung erfordert das thermische Kraftwerk jedoch auch eine Versorgung mit ausreichend Kühlwasser, um im Dampfteil durch den Kondensator eine geeignete Wärmesenke zur Verfügung stellen zu können. Die Versorgung des Kondensators erfolgt hierbei typischerweise wiederum über eine separate Zuleitung, mittels welcher Meerwasser im Sinne von Kühlwasser dem Kondensator zugeführt werden kann.

Das Kraftwerk bzw. die Meerwasserentsalzungseinrichtung benötigen also jeweils ein eigenständiges Versorgungssystem, über welches die jeweiligen Einrichtungen mit Meerwasser versorgt werden können. Dies hat nicht nur verhältnismäßig hohe Kosten zur Folge, sondern auch die Wartungs- und Reparaturmaßnahmen steigen proportional mit der Anzahl der Versorgungssysteme an. Weiterhin erfordern die einzelnen Versorgungssysteme einen verhältnismäßig hohen Eigenbedarf an elektrischer Energie, um die darin befindlichen Pumpen betreiben zu können.

Überdies wird sowohl von der thermischen Meerwasserentsalzungseinrichtung als auch aus dem Kondensator des Dampfteils des Kraftwerks stark erwärmtes Meerwasser abgegeben, welches ohne weitere Nutzung verworfen wird und typischerweise an das Meer erneut zurückgeführt wird. Dies sorgt nicht nur für eine unerwünschte Änderung der Meeresökologie, sondern auch für eine ineffiziente Nutzung der thermischen Ressourcen.

Insofern stellt sich die Aufgabe, eine Kraftwerksanlage vorzuschlagen, welche mit einer thermischen Meerwasserentsalzungseinrichtung verschaltet ist, in welcher die oben genannten Nachteile aus dem Stand der Technik vermieden werden können. Insbesondere soll eine Kraftwerksanlage vorgeschlagen werden, welche besonders energieeffizient ausgeführt werden kann.

Diese der Erfindung zugrundeliegenden Aufgaben werden gelöst durch eine Kraftwerksanlage gemäß Anspruch 1.

Insbesondere werden die der Erfindung zugrundeliegenden Aufgaben gelöst durch eine Kraftwerksanlage umfassend einen Dampfteil, welcher neben einem Kondensator und einem Abhitzedampferzeuger auch eine mit beiden fluidtechnisch verschaltete Dampfturbine aufweist, sowie weiterhin umfassend eine thermische Meerwasserentsalzungseinrichtung, die ebenfalls fluidtechnisch mit dem Abhitzedampferzeuger zur Versorgung mit Wasserdampf verschaltet ist, wobei weiterhin eine Zuleitung umfasst ist, über welche die thermische Meerwasserentsalzungseinrichtung mit Meerwasser versorgt wird, und welche stromauf der Meerwasserentsalzungseinrichtung mit dem Kondensator des Dampfteils wärmetechnisch verschaltet ist.

An dieser Stelle ist darauf hinzuweisen, dass der Dampfteil typischerweise dazu ausgelegt ist, thermische Energie in geeigneter Form bereitzustellen, um mit der Kraftwerksanlage elektrische Energie zu gewinnen. Der Dampfteil weist hierbei einen Abhitzedampferzeuger auf, in welchem Wasserdampf aus normalerweise flüssigem Wasser generiert wird. Der Abhitzedampferzeuger kann aber auch zur Überhitzung von bereits bestehendem Wasserdampf genutzt werden. Der erzeugte Wasserdampf wird über eine Dampfturbine entspannt, wobei thermische Energie in drehmechanische Energie umgesetzt wird, welche wiederum in elektrische Energie mittels eines Generators überführt werden kann. Anschließend wird der ungenutzte Restdampf in einem Kondensator kondensiert, so dass wieder flüssiges Wasser zur Verfügung stehen kann, welches etwa in einer Kreisschaltung erneut dem Abhitzedampferzeuger zugeführt wird. Eine solche Kraftwerksanlage kann etwa ein Kohledampfkraftwerk sein, ein nuklear betriebenes Dampfkraftwerk oder aber auch ein gekoppeltes Gas- und Dampf-Kraftwerk.

Erfindungsgemäß ist also vorgesehen, den Dampfteil der Kraftwerksanlage mit der thermischen Meerwasserentsalzungseinrichtung so fluidtechnisch zu koppeln, dass die Ableitung des Kondensators aus dem Dampfteil, der Zuleitung für die thermische Meerwasserentsalzungseinrichtung entspricht. In anderen Worten ist eine gemeinschaftliche Zuleitung vorgesehen, welche die thermische Meerwasserentsalzungseinrichtung mit Meerwasser versorgt, welche Zuleitung jedoch stromauf der Meerwasserentsalzungseinrichtung mit dem Kondensator des Dampfteils wärmetechnisch verschaltet ist. Insofern benötigt die Kraftwerksanlage nur ein leitungstechnisches Versorgungssystem zur Versorgung der Meerwasserentsalzungseinrichtung und des Kondensators mit Meerwasser gemeinsam.

Dadurch ergibt sich insbesondere der Vorteil, dass das aus dem Kondensator abgeführte Meerwasser, welches in dem Kondensator thermisch aufbereitet wurde, der Meerwasserentsalzungseinrichtung zugeführt werden kann und bereits einen höheren Wärmeinhalt aufweist. Durch diese Reihenschaltung von Kondensator und thermischer Meerwasserentsalzungseinrichtung ergeben sich zahlreiche weitere Synergieeffekte. So können etwa die erforderlichen Rohrleitungen der Versorgungssysteme verhältnismäßig kürzer und damit kostengünstiger realisiert werden. Weiterhin kann die erfindungsgemäße Zuleitung durch eine geringere Anzahl an Förderpumpen, vorzugsweise nur eine Förderpumpe, mit Meerwasser versorgt werden. Redundanzen durch Vorhalten unterschiedlicher Förderpumpen in voneinander getrennten Versorgungssystemen sind somit nicht mehr erforderlich. Weiterhin entfällt aufgrund der vorliegenden Erfindung eine doppelte Aufbereitung des Meerwassers durch mechanische bzw. chemische Verfahren im Bereich der Entnahme der getrennten Zuleitungen. Erfindungsgemäß reicht nämlich schon eine geeignete Aufbereitung im Entnahmebereich der Zuleitung bereits aus, um den Kondensator zunächst mit ausreichend aufbereitetem Meerwasser zu versorgen. Die Aufbereitungsqualität ist hierbei typischerweise sogar auch noch ausreichend, um auch nachfolgend die thermische Meerwasserentsalzungseinrichtung noch weiter mit dem Meerwasser versorgen zu können. Die Meerwasserentsalzungseinrichtung erfordert hierbei jedoch einen höheren Grad der Aufbereitung.

Ebenfalls zeigen Berechnungen der Anmelderin, dass im Vergleich zu der aus dem Stand der Technik bekannten Parallelschaltung zur Versorgung von thermischer Meerwasserentsalzungseinrichtung und Kondensator in der erfindungsgemäß vorgeschlagenen Reihenschaltung relativ kleinere Komponente und verhältnismäßig weniger Komponenten vorgesehen werden können. Auch dieser Umstand ermöglicht eine signifikante Materialeinsparung.

Durch die Reihenschaltung können zudem auch Druckverluste im Leitungssystem der Zuleitung vermindert werden, wobei auch der Massenstrom des in der Zuleitung geförderten Meerwassers geringer ausfallen kann als die Summe der beiden Massenströme in einer Parallelschaltung. Die Druckverluste werden dadurch geringer und auch der Leistungsbedarf der einzelnen Förderpumpen sinkt somit ab.

Der größte sich aus der Erfindung ergebende Vorteil, ist jedoch die Nutzung der Abwärme des Kondensators im Dampfteil durch die thermische Meerwasserentsalzungseinrichtung. Aufgrund der Vorschaltung des Kondensators, erwärmt dieser nämlich bei Betrieb das in der Zuleitung geführte Meerwasser, welches anschließend in der Meerwasserentsalzungseinrichtung nochmals thermisch soweit aufgearbeitet werden muss, damit es zu einem Verdampfen der flüssigen Phase des Meerwassers kommt. Insofern ist eine geringere thermische Energiemenge aus dem Dampfteil der Kraftwerksanlage erforderlich, um die Verdampfung durchzuführen. Infolge steigt damit nicht nur die Effizienz der Meerwasserentsalzungseinrichtung sondern auch der gesamten Kraftwerksanlage.

Gemäß einer ersten bevorzugten Ausführungsform der erfindungsgemäßen Kraftwerksanlage ist vorgesehen, dass die thermische Meerwasserentsalzungseinrichtung eine Ableitung aufweist, über welche mit Salz angereichertes Meerwasser abgeführt wird.

In Weiterführung dieser Idee kann eine Bypassleitung vorgesehen sein, welche stromab des Kondensators in die Zuleitung fluidtechnisch geschaltet und gleichzeitig in die Ableitung fluidtechnisch geschaltet ist, stromab der thermischen Meerwasserentsalzungseinrichtung. Die Bypassleitung erlaubt damit die Anpassung der an die thermische Meerwasserentsalzungseinrichtung zugeführten Mengen an Meerwasser. So kann etwa in Abhängigkeit des Betriebszustandes des Dampfteils der Kraftwerksanlage der thermischen Meerwasserentsalzungseinrichtung mehr oder weniger Meerwasser zugeführt werden. Ebenfalls kann mit Hilfe der Bypassleitung das Mischungsverhältnis des mit Salz und Mineralien angereicherten Meerwassers in der Ableitung geeignet angepasst werden. Sind bspw. für die Ableitung dieses mit Salzen und Mineralien angereicherten Meerwassers bestimmte Grenzkonzentrationen einzuhalten, können dieses etwa geeignet durch Mischung mit Meerwasser aus der Zuleitung eingestellt werden.

Entsprechend einer weiteren Ausführungsform der Erfindung ist vorgesehen, dass die Zuleitung mit einem Entnahmebereich fluidtechnisch verschaltet ist, mittels welchem Meerwasser aus einem geeigneten Reservoir entnommen werden kann und welcher eine Förderpumpe aufweist, die das Meerwasser in der Zuleitung mit einer Strömung beaufschlagt. Der Entnahmebereich weist zudem im Normalfall geeignete Filteranlagen auf, um das Meerwasser von Feststoffteilchen zu reinigen, sowie möglicherweise chemische Reinigungsabschnitte, in denen das Meerwasser etwa durch Chlorierung gereinigt werden kann. Derartige chemische Reinigungsschritte sind erforderlich, um die Betriebsfähigkeit von Kondensator und thermischer Meerwasserentsalzungseinrichtung gewährleisten zu können.

Das Reservoir wird ausführungsgemäß nicht mit beansprucht, und beschreibt lediglich einen Ort an dem der Entnahmebereich bestimmungsgemäß zur Meerwasserentnahme genutzt werden kann. Der Entnahmebereich gewährleistet somit gezielt die Versorgung der Zuleitung von Meerwasser mit einer geeigneten Qualität und kann aufgrund der Nutzung der Förderpumpe, den Strom an Meerwasser in der Zuleitung geeignet einstellen.

Entsprechend eines weiteren Aspekts der Erfindung ist vorgesehen, dass die Zuleitung stromauf des Kondensators eine Abzweigung aufweist, welche mit einer Kühlwasserleitung verschaltet ist, wobei die Kühlwasserleitung ebenfalls mit der thermischen Meerwasserentsalzungseinrichtung zur Versorgung dieser mit Kühlwasser verschaltet ist. Ausführungsgemäß kann also verhältnismäßig kühleres Meerwasser zur Unterstützung der Kondensationsvorgänge in der Meerwasserentsalzungseinrichtung genutzt werden. Alternativ ist es jedoch auch möglich, das über die Zuleitung der Meerwasserentsalzungseinrichtung zugeführte Meerwasser in Teilströme aufzuteilen, und einen Teilstrom zur Versorgung der Kondensationsvorrichtung zu nutzen.

Gemäß einer Weiterführung dieser Ausführungsform kann vorgesehen sein, dass die Kühlwasserleitung stromab der thermischen Meerwasserentsalzungseinrichtung mit der Ableitung derart verschaltet ist, dass das von der thermischen Meerwasserentsalzungseinrichtung nicht mehr genutzte Kühlwasser der Ableitung zugeführt werden kann. Diese Zuführung ermöglicht einerseits eine thermische Konditionierung des in der Ableitung geführten angereicherten Meerwassers wie auch eine Vermischung zu geringeren Salz- und Mineralienkonzentrationen in diesem Meerwasser. Folglich ist das mit der Ableitung abgeführte Meerwasser weniger stark angereichert und kann problemlos dem Meer zugeführt werden.

Entsprechend einer besonders bevorzugten Ausführungsform der Erfindung ist vorgesehen, dass weiterhin eine Kondensatleitung umfasst ist, welche mit der thermischen Meerwasserentsalzungseinrichtung und dem Dampfteil fluidtechnisch verschaltet ist, und welche dazu ausgebildet ist, in der thermischen Meerwasserentsalzungseinrichtung kondensierten Wasserdampf an das Dampfteil zur thermischen Aufbereitung zurückzuführen. In anderen Worten liegt eine fluidtechnische Kopplung zwischen Dampfteil und thermischer Meerwasserentsalzungseinrichtung mittels eines Leitungskreislaufs vor, welcher zum einen die thermische Meerwasserentsalzungseinrichtung mit Dampf und damit mit thermischer Energie zur Entsalzung versorgt und zum anderen nicht weiterhin von der thermischen Meerwasserentsalzungseinrichtung genutztes Kondensat wieder dem Dampfteil zur erneuten thermischen Aufbereitung zuführt. Insofern mündet die Kondensatleitung auch an einer Stelle in das Dampfteil, welche zwischen Kondensator und Abhitzedampferzeuger angeordnet ist. Somit wird das in den Dampfteil zurück geführte Wasser, welches einen hohen Reinheitsgrad besitzt, nicht verworfen und kann damit zyklisch wieder verwendet werden.

Gemäß einer bevorzugten Ausführungsform der Erfindung ist vorgesehen, dass die Kraftwerksanlage eine gekoppelte Gas- und Dampf-Kraftwerksanlage ist, in welcher der Abhitzedampferzeuger mittels des Abgases aus dem Gasteil der Kraftwerksanlage mit thermischer Energie versorgt wird. Eine gekoppelte Gas- und Dampf-Kraftwerksanlage weist neben dem Dampfteil auch einen Gasteil auf. Beide Teile können dazu ausgebildet sein, elektrische Energie bereitzustellen. Der Gasteil umfasst hierbei eine Gasturbine, welche thermisch mit dem Dampfteil gekoppelt ist. Die Kopplung erfolgt in dem Bereich des Abhitzedampferzeugers, in welchen die heißen Abgase der Gasturbine eingeleitet werden. In dem Abhitzedampferzeuger wird dann die thermische Energie der Abgase genutzt, um damit Wasser als Arbeitsmittel in dem Dampfteil thermisch aufzubereiten. Das so thermisch konditionierte Wasser wird anschließend einer von dem Dampfteil umfassten Dampfturbine zugeleitet, so dass diese drehmechanisch betrieben werden kann.

Nachfolgend soll die Erfindung anhand einiger Figuren näher im Detail beschrieben werden. Hierbei sind die Figuren lediglich schematisch zu verstehen und stellen somit keinerlei Einschränkung hinsichtlich deren Ausführbarkeit dar.

Fernerhin ist darauf hinzuweisen, dass die in den nachfolgenden Figuren dargestellten Merkmale in beliebiger Kombination miteinander, wie auch mit den vorangehenden Ausführungsformen der Erfindung kombiniert werden können, soweit eine Kombinationslösung die der Erfindung zugrundeliegende Aufgabe lösen kann.

Weiterhin ist darauf hinzuweisen, dass die technischen Wirkungen der Merkmale mit gleichen Bezugszeichen einander entsprechen.

Hierbei zeigen:
- Figur 1: eine Kraftwerksanlage mit thermischer Meerwasserentsalzungseinrichtung gemäß dem Stand der Technik in schematischer Schaltansicht;
- Figur 2: eine Ausführungsform einer erfindungsgemäßen Kraftwerksanlage mit thermischer Meerwasserentsalzungseinrichtung in schematischer Schaltansicht.

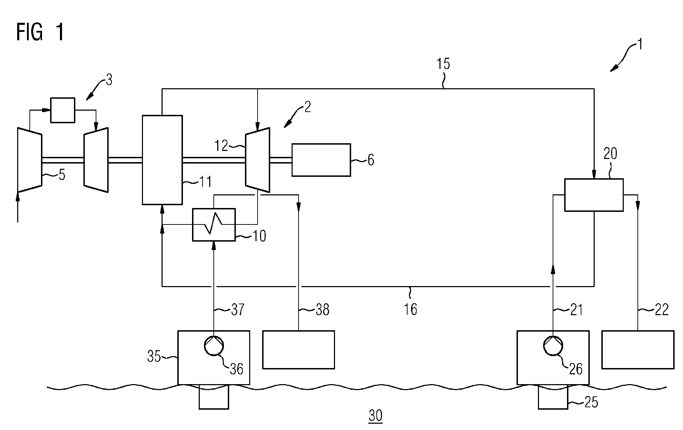

Figur 1 zeigt eine schematische Schaltansicht einer Kraftwerksanlage 1 wie sie aus dem Stand der Technik bekannt ist. Hierbei weist die Kraftwerksanlage 1 einen Dampfteil 2 auf, welcher neben einem Kondensator 10 und einem Abhitzedampferzeuger 11 auch eine Dampfturbine 12 umfasst. Der Dampfteil 2 ist hierbei wärmetechnisch gekoppelt mit einem Gasteil 3, der eine Gasturbine 5 umfasst. Bei Betrieb der Gasturbine 5 wird das auf über 500 °C erwärmte Abgas der Gasturbine 5 dem Abhitzedampferzeuger 11 zum Wärmeübertrag zugeleitet. In dem Abhitzedampferzeuger 11 wird anschließend ein Arbeitsmittel, typischerweise Wasser, thermisch soweit aufbereitet, dass eine Verdampfung unter Druck erfolgt. Das Arbeitsmittel wird anschließend einer Dampfturbine 12 zugeleitet, in welcher das überhitzte Arbeitsmittel unter gleichzeitiger Abgabe von Energie entspannt wird. Die abgegebene thermische Energie wird umgesetzt in drehmechanische Energie und in zweiter Folge in elektrische Energie in dem Generator 6, welcher mit der Dampfturbine 12 über eine Welle verbunden ist. Nach thermischer Entspannung in der Dampfturbine 12 wird der Restdampf dem Kondensator 10 zugeleitet, in welchen dem Restdampf ausreichend Energie entzogen wird, um eine Verflüssigung zu erreichen. Das wieder verflüssigte Arbeitsmittel wird nachfolgend erneut dem Abhitzedampferzeuger 11 zugeführt, wo erneut eine Verdampfung erfolgt.

Um den Kondensator 10 des Dampfteils 2 mit ausreichender Kälte zu versorgen, ist dieser wärmetechnisch verschaltet mit einer Zuleitung 37, die erlaubt, Meerwasser aus einem Reservoir 30 zu entnehmen. Die Zuleitung 37 weist hierbei im Bereich des Reservoirs 30 einen Entnahmebereich auf, welcher etwa eine Förderpumpe 36 umfasst, um das Meerwasser in der Zuleitung 37 mit einer Strömung zu beaufschlagen. Nach erfolgtem Wärmetausch in dem Kondensator 10, wird das Meerwasser erneut über eine Ableitung 38 dem Reservoir 30 zurückgeführt.

Die von der Kraftwerksanlage 1 umfasste thermische Meerwasserentsalzungseinrichtung 20 entnimmt ihrerseits über eine separate Zuleitung 21 Meerwasser aus dem Reservoir 30. Die separate Zuleitung 21 weist hierbei ihrerseits einen Entnahmebereich 25 auf, welcher eine Förderpumpe 26 hat. Sowohl der Entnahmebereich 25, welcher der thermischen Meerwasserentsalzungseinrichtung 20 zugeordnet ist, als auch der Entnahmebereich 35, welcher dem Kondensator 10 zugeordnet ist, weisen typischerweise mechanische Filtereinrichtungen auf, um Feststoffteilchen aus dem entnommenen Meerwasser abzutrennen. Ebenso werden typischerweise chemische Reinigungsabschnitte mit umfasst, welche dazu dienen, das Meerwasser für die nachfolgenden Nutzungen geeignet chemisch zu konditionieren. Derartige chemische Reinigungsschritte sind etwa eine Chlorierung durch gezieltes Hinzufügen von hochkonzentrierter Chlorlösung.

Damit die thermische Meerwasserentsalzungseinrichtung 20 mit ausreichender thermischer Energie versorgt werden kann, ist diese über eine Dampfleitung 15 mit dem Dampfteil 2 fluidtechnisch verschaltet. In anderen Worten kann über die Dampfleitung 15 aus dem Dampfteil 2 Dampf entnommen werden, welcher der Meerwasserentsalzungseinrichtung 20 zugeführt wird. Das nach erfolgter Wärmeübertragung nicht mehr weiter benötigte Arbeitsmittel aus der Dampfleitung 15 wird anschließend, etwa nach Kondensation in der Meerwasserentsalzungseinrichtung 20, in flüssiger Form dem Abhitzedampferzeuger 11 erneut zugeführt, um dort einer erneuten thermischen Aufbereitung unterworfen zu werden. Hierbei mündet eine Kondensatleitung 16, welche von der Meerwasserentsalzungseinrichtung 20 abgeht, in das Dampfteil 2, an einer Stelle, welche zwischen dem Kondensator 10 und dem Abhitzedampferzeuger 11 angeordnet ist. Dadurch kann gewährleistet werden, dass verhältnismäßig warmes Kondensat in den Abhitzedampferzeuger 11 unter Zuführung von weiterer thermischer Energie erneut verdampft werden kann.

Nachteilig an der Ausführungsform gemäß Figur 1 stellt sich nun dar, dass die Meerwasserentsalzungseinrichtung 20 ein eigenes Entnahmesystem zur Entnahme von Meerwasser aufweist, welches nicht mit dem Entnahmesystem für die Versorgung des Kondensators 10 mit Kühlwasser gekoppelt ist. Vielmehr weisen die beiden Entnahmebereiche 25 und 35 eigene Bauteile auf, ohne dass Synergien zwischen beiden genutzt werden könnten. Insbesondere umfassen beide Entnahmebereiche 25, 35 jeweils eigene Förderpumpen 26, 36, die separat betrieben werden müssen.

Um diese Nachteile nun zu vermeiden, schlägt die Erfindung vor, den Kondensator 10 mit der thermischen Meerwasserentsalzungseinrichtung 20 über eine Zuleitung 21 zu koppeln, so dass das aus dem Kondensator 10 austretende erwärmte Meerwasser der thermischen Meerwasserentsalzungseinrichtung 20 direkt zugeführt werden kann.

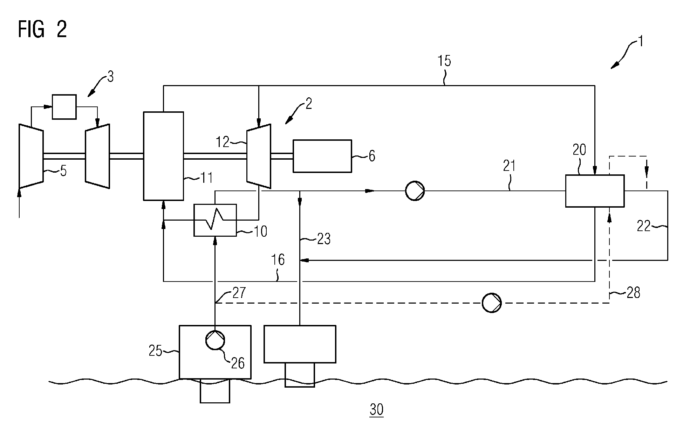

Figur 2 zeigt eine Ausführungsform einer derartigen erfindungsgemäßen Kraftwerksanlage 1. Diese Ausführungsform unterscheidet sich von der in Figur 1 gezeigten Kraftwerksanlage 1 dahingehend, dass nun die thermische Meerwasserentsalzungseinrichtung 20 nicht mehr direkt mit Meerwasser über eine eigenständige Entnahme über einen eigenständigen Entnahmebereich versorgt wird, sondern die Meerwasserentnahme zunächst über einen Entnahmebereich 25 erfolgt, der mit der Zuleitung 21 verbunden ist, die den Kondensator 10 mit Kühlwasser versorgt. Bei Betrieb des Dampfteils 2 der Kraftwerksanlage 1 erwärmt sich dieses in der Zuleitung 21 befindliche Meerwasser durch Wärmeübertrag und wird anschließend der thermischen Meerwasserentsalzungseinrichtung 20 zur Verdampfung der flüssigen Anteile des Meerwassers zugeführt. Die Strömung in der Zuleitung 21 stellt eine Förderpumpe 26 im Bereich des Entnahmebereichs 25 zur Verfügung. Sollte aber aufgrund der Leitungsbedingungen eine verstärkte Strömungsbeaufschlagung erforderlich sein, kann bspw. eine weitere Unterstützerpumpe in die Leitung 21 stromab des Kondensators 10 geschaltet sein.

Ausführungsgemäß erhält also die thermische Meerwasserentsalzungseinrichtung 20 bereits thermisch konditioniertes Meerwasser, welches nur noch einen verhältnismäßig geringeren Betrag an thermischer Wärme erfordert, um auf die erforderliche Verdampfungstemperatur erhitzt zu werden.

Nach erfolgter Meerwasserentsalzung in der Meerwasserentsalzungseinrichtung 20 wird das mit Salzen und Mineralien angereicherte Meerwasser über eine Ableitung 22 abgeführt. Die Abführung kann hierbei eine Rückführung des angereicherten Meerwassers in das Reservoir 30 vorsehen, aus welchem ursprünglich das Meerwasser mittels des Entnahmebereichs 25 entnommen wurde. Typischerweise ist das Reservoir 30 das Meeresbecken selbst.

Um die in der Ableitung 22 abgeführte angereicherte Lösung an Salzen und Mineralien geeignet zu geringeren Konzentrationen mischen zu können, kann eine Bypassleitung 23 vorgesehen sein, welche fluidtechnisch geschaltet ist in die Zuleitung 21 zwischen dem Kondensator 10 und der Meerwasserentsalzungseinrichtung 20 sowie die Ableitung 22 stromab der Meerwasserentsalzungseinrichtung 20.

Je nach in der Meerwasserentsalzungseinrichtung 20 angewandter Technologie, kann es erforderlich sein, die Meerwasserentsalzungseinrichtung 20 mit Kühlwasser zu versorgen. Dieses kann ausführungsgemäß über eine Abzweigung 27 stromab nach dem Entnahmebereich 25 aus der Zuleitung 21 entnommen werden und der Meerwasserentsalzungseinrichtung 20 direkt zugeführt werden. Das nicht weiter für Kühlzwecke benötigte Meerwasser kann über die Kühlwasserleitung 28, welche auch die Meerwasserentsalzungseinrichtung 20 mit dem Kühlwasser versorgt, wieder abgeführt werden, wobei die Kühlwasserleitung 28 in die Ableitung 22 stromab nach der Meerwasserentsalzungseinrichtung 20 mündet. Auch diese Verschaltung von Ableitung 22 und Kühlwasserleitung 28 erlaubt eine vorteilhafte Mischung der angereicherten Meerwasserlösung in der Ableitung 22, so dass etwa eine nur gering mit Salzen und Mineralien angereicherte Lösung dem Reservoir 30 zugeführt wird. Auch die Kühlwasserleitung 28 kann, wenn erforderlich, eine weitere Pumpe aufweisen, um eine ausreichende Strömung in der Kühlwasserleitung 28 gewährleisten zu können.

Weitere Ausführungsformen ergeben sich aus den Unteransprüchen.

## Patentansprüche

1. Kraftwerksanlage (1) umfassend einen Dampfteil (2), welcher neben einem Kondensator (10) und einem Abhitzdampferzeuger (11) auch eine mit beiden fluidtechnisch verschaltete Dampfturbine (12) aufweist, sowie weiterhin umfassend eine thermische Meerwasserentsalzungseinrichtung (20), die ebenfalls fluidtechnisch mit dem Abhitzdampferzeuger (11) zur Versorgung mit Wasserdampf verschaltet ist,
**dadurch gekennzeichnet, dass** weiterhin eine Zuleitung (21) umfasst ist, über welche die thermische Meerwasserentsalzungseinrichtung (20) mit Meerwasser versorgt wird, und welche stromauf der Meerwasserentsalzungseinrichtung (20) mit dem Kondensator (11) des Dampfteils (2) wärmetechnisch verschaltet ist.

2. Kraftwerksanlage nach Anspruch 1,
**dadurch gekennzeichnet, dass** die thermische Meerwasserentsalzungseinrichtung (20) eine Ableitung (22) aufweist, über welche mit Salz angereichertes Meerwasser abgeführt wird.

3. Kraftwerksanlage nach Anspruch 2,
**dadurch gekennzeichnet, dass** eine Bypassleitung (23) vorgesehen ist, welche stromab des Kondensators (10) in die Zuleitung (21) fluidtechnisch geschaltet ist und gleichzeitig in die Ableitung (22) fluidtechnisch geschaltet ist stromab der thermischen Meerwasserentsalzungseinrichtung (20).

4. Kraftwerksanlage nach einem der vorhergehenden Ansprüche,
**dadurch gekennzeichnet, dass** die Zuleitung (21) mit einem Entnahmebereich (25) fluidtechnisch verschaltet ist, mittels welchem Meerwasser aus einem geeigneten Reservoir (30) entnommen werden kann, und welcher eine Förderpumpe (26) aufweist, die das Meerwasser in der Zuleitung (21) mit einer Strömung beaufschlagt.

5. Kraftwerksanlage nach einem der vorhergehenden Ansprüche,
**dadurch gekennzeichnet, dass** die Zuleitung (21) stromauf des Kondensators (10) eine Abzweigung (27) aufweist, welche mit einer Kühlwasserleitung (28) verschaltet ist, wobei die Kühlwasserleitung (28) ebenfalls mit der thermischen Meerwasserentsalzungseinrichtung (20) zur Versorgung dieser mit Kühlwasser verschaltet ist.

6. Kraftwerksanlage nach Anspruch 5,
**dadurch gekennzeichnet, dass** die Kühlwasserleitung (28) stromab der thermischen Meerwasserentsalzungseinrichtung (20) mit der Ableitung (22) derart verschaltet ist, dass das von der thermischen Meerwasserentsalzungseinrichtung (20) nicht mehr genutzte Kühlwasser der Ableitung (22) zugeführt werden kann.

7. Kraftwerksanlage nach einem der vorhergehenden Ansprüche,
**dadurch gekennzeichnet, dass** weiterhin eine Kondensatleitung (16) umfasst ist, welche mit der thermischen Meerwasserentsalzungseinrichtung (20) und dem Dampfteil (2) fluidtechnisch verschaltet ist, und welche dazu ausgebildet ist, in der thermischen Meerwasserentsalzungseinrichtung (20) kondensierten Wasserdampf an das Dampfteil (2) zur erneuten thermischen Aufbereitung zurück zu führen.

8. Kraftwerksanlage nach einem der vorhergehenden Ansprüche,
**dadurch gekennzeichnet, dass** die Kraftwerksanlage (1) eine gekoppelte Gas-und-Dampf-Kraftwerksanlage ist, in welcher der Abhitzdampferzeuger (11) mittels des Abgases aus dem Gasteil (3) der Kraftwerksanlage (1) mit thermischer Energie versorgt wird.
